# EUROPÄISCHE PATENTSCHRIFT

(11) **EP 3 383 140 B1**
(45) Veröffentlichungstag und Bekanntmachung des Hinweises auf die Patenterteilung: **28.10.2020**
(21) Anmeldenummer: 18165513.5
(22) Anmeldetag: 03.04.2018
(51) Int. Cl.: H05B 6/12

(54) **VORRICHTUNG ZUR INDUKTIVEN ENERGIEÜBERTRAGUNG**
DEVICE FOR INDUCTIVE ENERGY TRANSFER
DISPOSITIF DE TRANSMISSION D'ÉNERGIE INDUCTIVE

(30) Priorität: 30.03.2017 ES 201730497; 12.03.2018 WO PCT/IB2018/051620
(43) Veröffentlichungstag der Anmeldung: 03.10.2018
(73) Patentinhaber: BSH Hausgeräte GmbH, 81739 München (DE)
(72) Erfinder: Acero Acero, Jesus, 50002 Zaragoza (ES); Almolda Fandos, Manuel, 50019 Zaragoza (ES); Hernandez Blasco, Pablo Jesus, 50019 Zaragoza (ES); Llorente Gil, Sergio, 50009 Zaragoza (ES); Lope Moratilla, Ignacio, 50010 Zaragoza (ES); Moya Albertin, Maria Elena, 50002 Zaragoza (ES); Serrano Trullen, Javier, 50017 Zaragoza (ES)

(56) Entgegenhaltungen:
- EP-A2- 2 207 401
- WO-A1-2010/148546
- JP-A- H1 145 777
- JP-A- 2008 188 159
- JP-A- 2014 096 243

## Beschreibung

Die Erfindung betrifft eine Vorrichtung zur induktiven Energieübertragung nach dem Oberbegriff des Anspruchs 1 und ein Verfahren zur Herstellung einer Vorrichtung zur induktiven
Energieübertragung nach dem Oberbegriff des Anspruchs 7.

Aus der europäischen Patentanmeldung EP 1 858 300 A1 ist bereits eine Induktionskochfeldvorrichtung mit einer Vielzahl von überlappenden Induktionsheizelementen bekannt. Die Induktionsheizelemente sind in mehreren Ebenen übereinander angeordnet. In jeder der Ebenen ist ein Teil der Induktionsheizelemente in Form einer Matrix koplanar relativ
zueinander angeordnet. Die Dokumenten JP H11 45777 A, JP 2014 096243 A und WO2010/148546 A1 offenbaren weitere Induktionskochfeldvorrichtungen nach dem Stand der Technik.

Die Aufgabe der Erfindung besteht insbesondere darin, eine gattungsgemäße Vorrichtung mit verbesserten Eigenschaften hinsichtlich einer Leistungsabgabe und eines Wirkungsgrads bereitzustellen. Die Aufgabe wird erfindungsgemäß durch die Merkmale der Ansprüche 1 und 7 gelöst, während vorteilhafte Ausgestaltungen und Weiterbildungen der Erfindung den Unteransprüchen entnommen werden können.

Die Erfindung geht aus von einer Vorrichtung zur induktiven Energieübertragung, insbesondere von einer Induktionskochfeldvorrichtung, mit zumindest einer Induktionseinheit, insbesondere mit zumindest einer Induktionsheizeinheit, welche zumindest ein Induktionselement umfasst und mit zumindest einer Kontaktebene, insbesondere mit zumindest einer Kochfeldebene.

Es wird vorgeschlagen, dass sich das zumindest eine Induktionselement zumindest in einem Teilbereich entlang einer ersten Haupterstreckungsebene erstreckt, die von der Kochfeldebene abweicht. Durch die erfindungsgemäße Ausgestaltung kann eine gattungsgemäße Vorrichtung vorteilhaft weiterentwickelt werden. Die zumindest eine Induktionseinheit kann mit weiteren Induktionseinheiten besonders kompakt überlappend angeordnet werden.

Unter einer "Vorrichtung zur induktiven Energieübertragung" soll insbesondere eine Vorrichtung verstanden werden, welche zumindest eine Induktivität, vorteilhaft in Form zumindest einer Spule, aufweist und welche insbesondere in wenigstens einem Betriebszustand, insbesondere mittels der Induktivität, Energie an zumindest eine weitere Einheit zum Zweck einer Energieübertagung an die weitere Einheit bereitstellt. Insbesondere weist die Vorrichtung zur induktiven Energieübertragung eine Hauptfunktion in Form einer induktiven Energieübertragung auf.

Die weitere Einheit könnte beispielsweise eine Handwerkzeugmaschine aufweisen, wie beispielsweise einen Bohrer und/oder einen Elektroschrauber und/oder einen Bohrhammer und/oder eine Säge. Alternativ oder zusätzlich könnte die weitere Einheit insbesondere ein selbstfahrendes Arbeitsgerät und/oder zumindest eine Fernsteuerung und/oder zumindest eine Fernbedienung aufweisen. Das selbstfahrende Arbeitsgerät könnte beispielsweise ein selbstfahrender Rasenmäher und/oder ein selbstfahrender Staubsauger sein. Die Fernsteuerung und/oder die Fernbedienung könnte insbesondere zu einer Bedienung und/oder zu einer Steuerung zumindest einer Jalousie und/oder zumindest eines Elektrogeräts, insbesondere zumindest eines Haushaltselektrogeräts, und/oder zumindest eines Modellobjekts, wie beispielsweise eines Modellautos und/oder eines Modellflugzeugs und/oder eines Modellboots, vorgesehen sein. Beispielsweise könnte die weitere Einheit alternativ oder zusätzlich zumindest ein Standgerät, wie beispielsweise zumindest einen Rechner und/oder zumindest einen Personal Computer, und/oder zumindest ein Mobilgerät, wie beispielsweise zumindest einen Laptop und/oder zumindest ein Handy, aufweisen. Die weitere Einheit könnte alternativ oder zusätzlich beispielsweise zumindest ein Reinigungsgerät, wie beispielsweise eine elektrische Zahnbürste, und/oder zumindest ein elektrisch betriebenes medizinisches Gerät aufweisen. Insbesondere könnte die weitere Einheit alternativ oder zusätzlich zumindest ein Küchengerät und/oder zumindest ein Haushaltsgerät aufweisen.

Nachfolgend werden die in den Ansprüchen genannten Begriffe zunächst allgemein erläutert und anschließend anhand einer beispielhaft ausgewählten Ausgestaltung in Form einer Induktionskochfeldvorrichtung eines Induktionskochfelds. Dabei ist der Grundgedanke jedoch viel breiter und kann allgemein in Verbindung mit eingangs genannten Vorrichtungen zur induktiven Energieübertragung gesehen werden. Somit schließt die Vorrichtung zur induktiven Energieübertragung auch Lösungen ein, die eine Übertragung elektrischer Energie von einem Sender auf einen Empfänger und umgekehrt betreffen. Dies unabhängig davon, was die elektrische Energie auf der Empfängerseite bewirken soll, sei es das Laden eines Energiespeichers oder unmittelbar der Betrieb einer elektrisch betriebenen weiteren Einheit.

Unter einer "Induktionseinheit" soll insbesondere eine Einheit verstanden werden, welche in wenigstens einem Betriebszustand induktiv Energie bereitstellt und welche insbesondere eine Hauptfunktion in Form einer Energiebereitstellung aufweist. Zu der Bereitstellung von Energie weist die Induktionseinheit insbesondere zumindest ein Induktionselement auf, welches insbesondere zumindest eine Spule, insbesondere zumindest eine Primärspule, aufweist und welches insbesondere in dem Betriebszustand induktiv Energie bereitstellt. In der beschriebenen beispielhaft ausgewählten Ausgestaltung ist die Induktionseinheit insbesondere eine Induktionsheizeinheit und das Induktionselement insbesondere ein Induktionsheizelement.

Unter einer "Induktionskochfeldvorrichtung" soll insbesondere zumindest ein Teil, insbesondere eine Unterbaugruppe, eines Induktionskochfelds verstanden werden. Das Induktionsheizelement ist insbesondere dazu vorgesehen, ein elektromagnetisches Wechselfeld insbesondere mit einer Frequenz in einem Bereich von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Insbesondere weist die Vorrichtung zur induktiven Energieübertragung, insbesondere Induktionskochfeldvorrichtung, zumindest vier, insbesondere zumindest sechs, vorteilhaft zumindest acht, besonders vorteilhaft zumindest zehn, vorzugsweise zumindest zwölf und besonders bevorzugt eine Vielzahl von Induktionselemente(n), insbesondere Induktionsheizelemente(n), auf.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Längserstreckung" eines Objekts soll insbesondere Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnten die Induktionselemente, insbesondere die Induktionsheizelemente, bei einer senkrechten Betrachtung auf zumindest eine Haupterstreckungsebene wenigstens eines der Induktionselemente, insbesondere wenigstens eines der Induktionsheizelemente, eine wenigstens im Wesentlichen polygonale Gestalt aufweisen, wie beispielsweise eine wenigstens im Wesentlichen rechteckige und/oder quadratische und/oder n-eckige Gestalt. Vorteilhaft weisen die Induktionselemente, insbesondere die Induktionsheizelemente, bei einer senkrechten Betrachtung auf zumindest eine Haupterstreckungsebene wenigstens eines der Induktionselemente, insbesondere wenigstens eines der Induktionsheizelemente, eine wenigstens im Wesentlichen ovale Gestalt auf. Die Induktionsheizelemente könnten bei einer senkrechten Betrachtung auf zumindest eine Haupterstreckungsebene wenigstens eines der Induktionsheizelemente eine wenigstens im Wesentlichen kreisförmige Gestalt aufweisen. Alternativ oder zusätzlich könnten die Induktionselemente, insbesondere die Induktionsheizelemente, bei einer senkrechten Betrachtung auf zumindest eine Haupterstreckungsebene wenigstens eines der Induktionselemente, insbesondere wenigstens eines der Induktionsheizelemente, eine wenigstens im Wesentlichen ellipsenförmige Gestalt aufweisen. Besonders vorteilhaft bildet das Induktionselement, insbesondere das Induktionsheizelement, zumindest einen Heizleiter aus.

Die Kontaktebene ist insbesondere eine Ebene, oberhalb welcher in wenigstens einem Betriebszustand, in welchem die Induktionseinheit Energie an die weitere Einheit bereitstellt, die weitere Einheit angeordnet ist. Insbesondere befindet sich die weitere Einheit in dem Betriebszustand in Kontakt mit der Kontaktebene und/oder ist insbesondere auf der Kontaktebene aufgestellt. Die Kontaktebene ist in der beispielhaft ausgewählten Ausgestaltung insbesondere eine Kochfeldebene.

Die Kochfeldebene wird insbesondere durch eine Kochfeldplatte definiert. In anderen Worten erstreckt sich die Kochfeldplatte entlang der Kochfeldebene. In einem montierten Zustand ist die Kochfeldplatte insbesondere zu einem Aufstellen von Gargeschirr vorgesehen. Darunter, dass die erste Haupterstreckungsebene von der Kochfeldebene abweicht, soll in diesem Zusammenhang insbesondere verstanden werden, dass die erste Haupterstreckungsebene schräg oder senkrecht zur Kochfeldebene verläuft. Insbesondere verläuft die Haupterstreckungsebene nicht parallel zur Kochfeldebene. Es ist in diesem Zusammenhang denkbar, dass sich das Induktionsheizelement vollständig in der ersten Haupterstreckungsebene erstreckt.

In einer weiteren Ausgestaltung der Erfindung wird vorgeschlagen, dass das zumindest eine Induktionselement, insbesondere Induktionsheizelement, einen ersten Abschnitt und zumindest einen zweiten Abschnitt aufweist, wobei sich der erste Abschnitt zumindest im Wesentlichen innerhalb einer zweiten Haupterstreckungsebene erstreckt und sich der zweite Abschnitt zumindest im Wesentlichen innerhalb einer von der zweiten Haupterstreckungsebene verschiedenen dritten Haupterstreckungsebene erstreckt. Dadurch können mehrere Induktionselemente, insbesondere mehrere Induktionsheizelemente, besonders kompakt zueinander angeordnet werden. Gleichzeitig kann ein besonders hoher Wirkungsgrad und eine gleichmäßige elektromagnetische Abstrahlung erzielt werden. Zusätzlich wird vorgeschlagen, dass das zumindest eine Induktionselement, insbesondere Induktionsheizelement, zumindest einen dritten Abschnitt aufweist, wobei der dritte Abschnitt zumindest im Wesentlichen innerhalb einer von der zweiten und dritten Haupterstreckungsebene verschiedenen vierten Haupterstreckungsebene erstreckt.

Ferner wird vorgeschlagen, dass die zweite Haupterstreckungsebene und die dritte Haupterstreckungsebene zumindest im Wesentlichen parallel zueinander verlaufen. Dadurch kann die Vorrichtung zur induktiven Energieübertragung, insbesondere die Induktionskochfeldvorrichtung, einen besonders hohen Wirkungsgrad erzielen. Weiterhin vorteilhaft ist das Induktionselement, insbesondere Induktionsheizelement, einstückig und/oder einteilig ausgebildet. Unter "zumindest im Wesentlichen" soll in diesem Zusammenhang insbesondere eine Abweichung von maximal 20°, bevorzugt von maximal 5° und besonders bevorzugt von maximal 0,5° verstanden werden.

Des Weiteren wird vorgeschlagen, dass die Induktionseinheit, insbesondere Induktionsheizeinheit, zumindest einen ersten Induktionselementträger, insbesondere Heizelementträger, umfasst, an dem das zumindest eine Induktionselement, insbesondere Induktionsheizelement, zumindest bereichsweise angeordnet ist. Dadurch kann eine besonders hohe Stabilität und eine einfache Montage erzielt werden. Der Induktionselementträger, insbesondere Heizelementträger, bildet vorzugsweise eine Glimmerplatte und/oder eine Leiterplatte aus. Die Leiterplatte könnte insbesondere zumindest eine Lage aufweisen, an welcher die Induktionselemente, insbesondere Induktionsheizelemente, angeordnet sind. Vorteilhaft könnte die Leiterplatte zumindest zwei und vorzugsweise zumindest drei Lagen aufweisen, an welchen die Induktionselemente, insbesondere Induktionsheizelemente, insbesondere angeordnet sind. Insbesondere könnten die Induktionselemente, insbesondere Induktionsheizelemente, auf die Leiterplatte und insbesondere auf Lagen der Leiterplatte aufgedruckt sein.

Weiterhin wird vorgeschlagen, dass der zumindest eine Teilbereich zwischen dem ersten Abschnitt und dem zweiten Abschnitt angeordnet ist. Dadurch kann die Induktionseinheit, insbesondere die Induktionsheizeinheit, besonders einfach hergestellt und montiert werden. Bevorzugt verläuft die erste Haupterstreckungsebene schräg zur zweiten Haupterstreckungsebene und/oder zur dritten Haupterstreckungsebene. Besonders vorteilhaft beträgt ein Winkel zwischen der ersten Haupterstreckungsebene und der zweiten Haupterstreckungsebene und/oder der dritten Haupterstreckungsebene zumindest im Wesentlichen 45°. Besonders weist das Induktionselement, insbesondere Induktionsheizelement, im Teilbereich einen zumindest im Wesentlichen doppelbogenförmigen und/oder S-förmigen Querschnitt auf.

Ferner wird vorgeschlagen, dass die Vorrichtung zur induktiven Energieübertragung, insbesondere Induktionskochfeldvorrichtung, zumindest eine weitere Induktionseinheit, insbesondere Induktionsheizeinheit, mit zumindest einem weiteren Induktionselement, insbesondere Induktionsheizelement, umfasst, welches einen weiteren ersten Abschnitt und zumindest einen weiteren zweiten Abschnitt aufweist, wobei sich der weitere erste Abschnitt zumindest in einem Betriebszustand zumindest im Wesentlichen innerhalb der zweiten Haupterstreckungsebene erstreckt und sich der zweite Abschnitt zumindest im Wesentlichen innerhalb der dritten Haupterstreckungsebene erstreckt. Dadurch kann eine besonders kompakte Bauweise und ein hoher Wirkungsgrad der Vorrichtung zur induktiven Energieübertragung, insbesondere Induktionskochfeldvorrichtung, erzielt werden.

Zudem wird vorgeschlagen, dass sich das zumindest eine Induktionselement, insbesondere Induktionsheizelement, und das zumindest eine weitere Induktionselement, insbesondere Induktionsheizelement, in einer Richtung senkrecht zu der zweiten Haupterstreckungsebene betrachtet teilweise überlappen. Insbesondere überlappt der weitere erste Abschnitt des weiteren Induktionselements, insbesondere Induktionsheizelements, zumindest teilweise und vorteilhaft zu wenigstens einem Großteil den zweiten Abschnitt des zumindest einen Induktionselements, insbesondere Induktionsheizelements. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Besonders vorteilhaft kann ein Matrixkochfeld mit zumindest einer erfindungsgemäßen Vorrichtung zur induktiven Energieübertragung, insbesondere Induktionskochfeldvorrichtung, ausgestattet werden.

Ferner wird ein Verfahren zur Herstellung einer Vorrichtung zur induktiven Energieübertragung, insbesondere Induktionskochfeldvorrichtung, vorgeschlagen, wobei in zumindest einem Verfahrensschritt ein erster Abschnitt eines Induktionselements, insbesondere Induktionsheizelements, einer Induktionseinheit, insbesondere Induktionsheizeinheit, mit zumindest einer ersten Kraftkomponente senkrecht zu einer Haupterstreckungsebene der Induktionseinheit, insbesondere Induktionsheizeinheit, beaufschlagt wird, wodurch eine Haupterstreckungsebene des ersten Abschnitts gegenüber einer Haupterstreckungsebene eines zweiten Abschnitts des Induktionselements, insbesondere Induktionsheizelements, der Induktionseinheit, insbesondere Induktionsheizeinheit, verschoben wird. Dadurch kann eine besonders einfache und kostengünstige Produktion der Vorrichtung zur induktiven Energieübertragung, insbesondere Induktionskochfeldvorrichtung, erfolgen. Insbesondere wirkt antiparallel zur ersten Kraftkomponente eine zweite Kraftkomponente auf den zweiten Abschnitt. Besonders vorteilhaft wird die Induktionseinheit, insbesondere Induktionsheizeinheit, zumindest bereichsweise verbogen und/oder plastisch dauerhaft verformt. Zusätzlich wird vorgeschlagen, dass in zumindest einem Verfahrensschritt das Induktionselement, insbesondere Induktionsheizelement, der Induktionseinheit, insbesondere Induktionsheizeinheit, insbesondere zweifach, vorteilhaft doppelbogenförmig und/oder S-förmig, geknickt und/oder gebogen wird. Dadurch kann eine besonders einfache Herstellung der Induktionseinheit, insbesondere Induktionsheizeinheit, erzielt werden.

Zusätzlich wird vorgeschlagen, dass in zumindest einem Verfahrensschritt eine Isolationsschicht der Induktionseinheit, insbesondere Induktionsheizeinheit, insbesondere in einem zwischen dem ersten Abschnitt und dem zweiten Abschnitt angeordneten Zwischenabschnitt, durchtrennt, insbesondere kontrolliert durchtrennt wird.

Eine hohe Flexibilität kann insbesondere erreicht werden durch eine Verwendung der Vorrichtung zur induktiven Energieübertragung, die zumindest eine Induktionseinheit, welche zumindest ein Induktionselement umfasst, und zumindest eine Kontaktebene aufweist, insbesondere in Verbindung mit zumindest einem Küchengerät und/oder mit zumindest einem Elektrowerkzeug und/oder mit zumindest einer Elektromobilität und/oder mit zumindest einem elektrisch betriebenen medizinischen Gegenstand und/oder mit zumindest einem Handy und/oder mit zumindest einem Laptop und/oder mit zumindest einem PC.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung zur induktiven Energieübertragung anhand einer beispielhaft ausgewählten Ausgestaltung als Induktionskochfeld mit einer Induktionskochfeldvorrichtung in einer schematischen Draufsicht,
- Fig. 2a: eine Induktionsheizeinheit der Induktionskochfeldvorrichtung in einer schematischen Draufsicht,
- Fig. 2b: die Induktionsheizeinheit nach Figur 2a in einer schematischen Seitenansicht,
- Fig. 3a: drei Induktionsheizeinheiten der Induktionskochfeldvorrichtung in einer schematischen Draufsicht,
- Fig. 3b: die drei Induktionsheizeinheiten nach Figur 3a in einer schematischen Seitenansicht,
- Fig. 3c: drei Induktionsheizeinheiten einer alternativ ausgebildeten Induktionskochfeldvorrichtung in einer schematischen perspektivischen Darstellung,
- Fig. 3d: drei Induktionsheizeinheiten einer alternativ ausgebildeten Induktionskochfeldvorrichtung in einer schematischen Seitenansicht,
- Fig. 4a: die Induktionskochfeldvorrichtung in einer schematischen Draufsicht,
- Fig. 4b: eine alternativ ausgebildete Induktionskochfeldvorrichtung in einer schematischen Draufsicht,
- Fig. 4c: eine alternativ ausgebildete Induktionskochfeldvorrichtung in einer schematischen Draufsicht,
- Fig. 4d: eine alternativ ausgebildete Induktionskochfeldvorrichtung in einer schematischen Draufsicht,
- Fig. 4e: eine alternativ ausgebildete Induktionskochfeldvorrichtung in einer schematischen Draufsicht,
- Fig. 4f: eine alternativ ausgebildete Induktionskochfeldvorrichtung in einer schematischen Draufsicht,
- Fig. 5a: ein Induktionsheizelement einer Induktionsheizeinheit in einer schematischen Draufsicht,
- Fig. 5b: ein Heizelementträger einer Induktionsheizeinheit vor einem Biegevorgang in einer schematischen perspektivischen Darstellung,
- Fig. 5c: der Heizelementträger und das Induktionsheizelement nach einem Biegevorgang in einer schematischen perspektivischen Darstellung,
- Fig. 5d: eine Anordnung mehrerer Induktionsheizeinheiten in einer schematischen perspektivischen Darstellung,
- Fig. 6a: eine Induktionsheizeinheit eines zweiten Ausführungsbeispiels einer Induktionskochfeldvorrichtung in einer schematischen Draufsicht,
- Fig. 6b: zwei Induktionsheizeinheiten des zweiten Ausführungsbeispiels der Induktionskochfeldvorrichtung in einer schematischen perspektivischen Darstellung,
- Fig. 6c: die zwei Induktionsheizeinheiten nach Figur 6b in einer schematischen Seitenansicht,
- Fig. 7a: drei Induktionsheizeinheiten eines dritten Ausführungsbeispiels der Induktionskochfeldvorrichtung in einer schematischen Draufsicht,
- Fig. 7b: die drei Induktionsheizeinheiten nach Figur 7a in einer schematischen Unteransicht,
- Fig. 7c: die drei Induktionsheizeinheiten nach Figur 7a in einer schematischen Schnittdarstellung,
- Fig. 8: eine alternative Vorrichtung zur induktiven Energieübertragung anhand einer beispielhaft ausgewählten Ausgestaltung zur induktiven Energieübertragung an eine Handwerkzeugmaschine in einer schematischen Darstellung und
- Fig. 9: eine alternative Vorrichtung zur induktiven Energieübertragung anhand einer beispielhaft ausgewählten Ausgestaltung zur induktiven Energieübertragung an ein selbstfahrendes Arbeitsgerät in einer schematischen Darstellung.

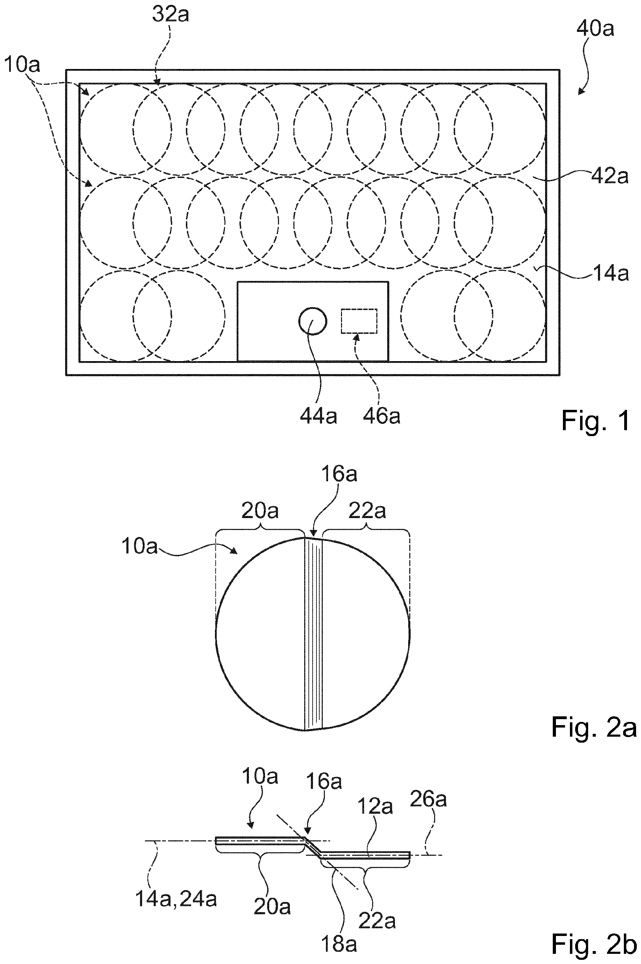

Die Figur 1 zeigt eine Vorrichtung zur induktiven Energieübertragung 40a anhand einer beispielhaft ausgewählten Ausgestaltung als Induktionskochfeld 40a. Die Vorrichtung zur induktiven Energieübertragung 40a weist eine Vielzahl an Induktionseinheiten 10a auf, welche in den Ausführungsbeispielen der Figuren 1 bis 7c insbesondere als Induktionsheizeinheiten 10a bezeichnet sind. Jede insbesondere als Induktionsheizeinheit 10a ausgebildete Induktionseinheit 10a umfasst ein Induktionselement 12a, welches in den Ausführungsbeispielen der Figuren 1 bis 7c insbesondere als Induktionsheizelement 12a bezeichnet ist.

Die Vorrichtung zur induktiven Energieübertragung 40a weist eine Kontaktebene 14a auf, welche in den Ausführungsbeispielen der Figuren 1 bis 7c insbesondere als Kochfeldebene 14a bezeichnet ist. Die Kontaktebene 14a ist von einer Auflageplatte 42a gebildet und/oder definiert, welche in den Ausführungsbeispielen der Figuren 1 bis 7c insbesondere als Kochfeldplatte 42a bezeichnet ist. Ein in den Ansprüchen genannter Induktionselementträger 28a ist in den Ausführungsbeispielen der Figuren 1 bis 7c insbesondere als Heizelementträger 28a bezeichnet.

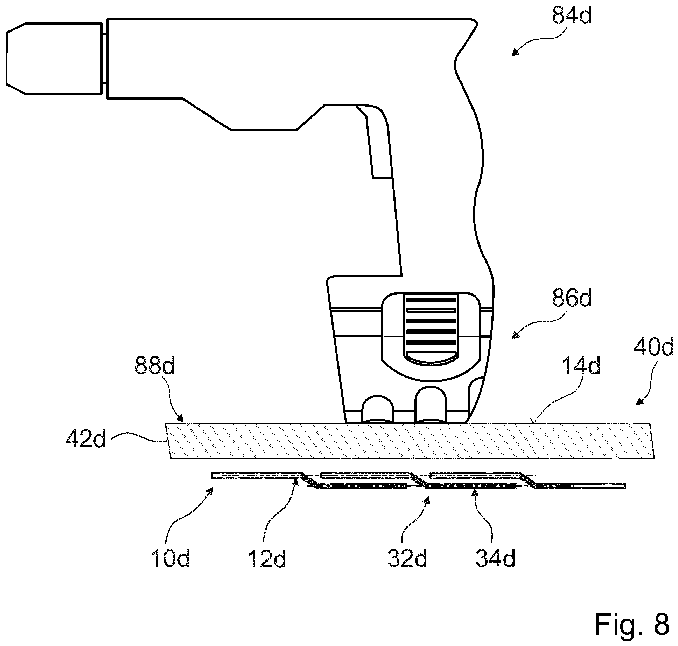

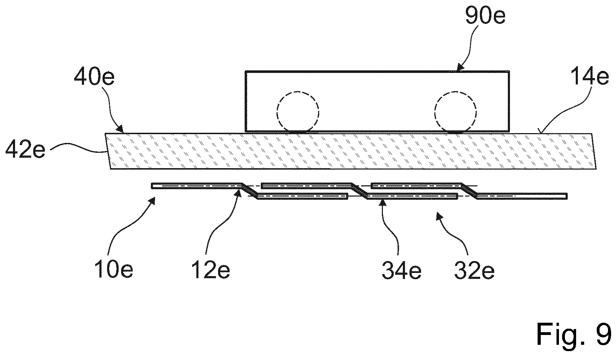

Trotz der auf ein Induktionskochfeld 40a abgestimmten spezifischen Bezeichnung der Objekte, ist die nachfolgende Beschreibung allgemein zu verstehen. Insbesondere kann die Vorrichtung zur induktiven Energieübertragung 40a in einer Vielzahl verschiedener technischer Gebiete angewendet werden. Beispielsweise könnte die Vorrichtung zur induktiven Energieübertragung 40a überall dort Verwendung finden, wo es gilt, kabellos und/oder insbesondere weitgehend positionierungsfrei weitere Einheiten mit elektrischer Energie zu versorgen. Dies gilt insbesondere in Verbindung mit Küchengeräten und/oder Elektrowerkzeugen und/oder Elektromobilität und/oder elektrisch betriebenen medizinischen Gegenständen und/oder Handys und/oder Laptops und/oder PCs. Aus diesen Gebieten sind zur besseren Veranschaulichung in den Ausführungsbeispielen der Figuren 8 und 9 zwei weitere beispielhaft ausgewählte Ausgestaltungen beschrieben. Nachfolgend erfolgt die Beschreibung anhand der genannten beispielhaft ausgewählten Ausgestaltung als Induktionskochfeld 40a.

Die Figur 1 zeigt ein Induktionskochfeld 40a mit einer Induktionskochfeldvorrichtung. Die Induktionskochfeldvorrichtung weist eine Kochfeldplatte 42a auf. In einem montierten Zustand bildet die Kochfeldplatte 42a einen Teil eines Kochfeldaußengehäuses, insbesondere des Induktionskochfelds 40a, aus. Die Kochfeldplatte 42a bildet in einer Einbaulage einen einem Bediener zugewandten Teil des Kochfeldaußengehäuses aus. In einem montierten Zustand ist die Kochfeldplatte 42a zu einem Aufstellen von Gargeschirr vorgesehen.

Die Induktionskochfeldvorrichtung weist eine Bedienerschnittstelle 44a zu einer Eingabe und/oder Auswahl von Betriebsparametern, beispielsweise einer Heizleistung und/oder einer Heizleistungsdichte und/oder einer Heizzone auf. Die Bedienerschnittstelle 44a ist zu einer Ausgabe eines Werts eines Betriebsparameters an einen Bediener vorgesehen. Beispielsweise könnte die Bedienerschnittstelle 44a den Wert des Betriebsparameters an einen Bediener optisch und/oder akustisch ausgeben.

Die Induktionskochfeldvorrichtung weist eine Steuereinheit 46a auf. Die Steuereinheit 46a ist dazu vorgesehen, in Abhängigkeit von mittels der Bedienerschnittstelle 44a eingegebenen Betriebsparametern Aktionen auszuführen und/oder Einstellungen zu verändern.

Die Induktionskochfeldvorrichtung weist eine Vielzahl von überlappenden Induktionsheizeinheiten 10a, 32a auf. Von mehrfach vorhandenen Objekten ist in den Figuren jeweils lediglich eines und ein weiteres mit einem Bezugszeichen versehen.

Im vorliegenden Ausführungsbeispiel sind die Induktionsheizeinheiten 10a, 32a, 48a in Form einer Matrix angeordnet. Ein Matrixkochfeld weist hierbei die Induktionskochfeldvorrichtung auf. Die Induktionsheizeinheiten 10a, 32a, 48a weisen im vorliegenden Ausführungsbeispiel bei einer senkrechten Betrachtung auf eine Kochfeldebene 14a der Induktionskochvorrichtung eine im Wesentlichen kreisförmige Gestalt auf.

Die Induktionskochfeldvorrichtung könnte beispielsweise zusätzlich zu den überlappenden Induktionsheizeinheiten 10a, 32a, 48a zumindest eine weitere Induktionsheizeinheit (nicht dargestellt) aufweisen, welche insbesondere überlappungsfrei zu den überlappenden Induktionsheizeinheiten 10a, 32a, 48a angeordnet sein könnte.

Die Induktionsheizeinheiten 10a sind dazu vorgesehen, auf der Kochfeldplatte 42a oberhalb der Induktionsheizeinheiten 10a aufgestelltes Gargeschirr zu erhitzen. In einem Betriebszustand stellen die Induktionsheizeinheiten 10a, welche insbesondere aktiviert sind, einen magnetischen Fluss bereit, welcher insbesondere zu einer Erhitzung von aufgestelltem Gargeschirr vorgesehen ist. Die Induktionsheizeinheiten 10a, welche insbesondere aktiviert sind, führen in einem Betriebszustand aufgestelltem Gargeschirr, insbesondere mittels des magnetischen Flusses, Energie zu. Die Steuereinheit 46a regelt in einem Betriebszustand eine Energiezufuhr zu den insbesondere aktivierten Induktionsheizeinheiten 10a, 32a, 48a. In einer Einbaulage sind die Induktionsheizeinheiten 10a unterhalb der Kochfeldplatte 42a angeordnet.

In den Figuren 2a und 2b ist beispielhaft eine der Induktionsheizeinheiten 10a, 32a, 48a dargestellt. Die folgende Beschreibung der einen Induktionsheizeinheit ist hierbei für alle anderen Induktionsheizeinheiten übertragbar. Die Induktionskochfeldvorrichtung 10a umfasst ein Induktionsheizelement 12a. Das Induktionsheizelement 12a bildet einen Heizleiter aus. Das Induktionsheizelement 12a ist einstückig ausgebildet. Das Induktionsheizelement 12a ist zur einfacheren Darstellung plattenförmig dargestellt. Tatsächlich handelt es sich bei dem Induktionsheizelement 12a um einen spiralförmig gewickelten Draht. Das Induktionsheizelement 12a erstreckt sich in einem Teilbereich 16a entlang einer ersten Haupterstreckungsebene 18a. Die erste Haupterstreckungsebene 18a weicht von der Kochfeldebene 14a ab. Die erste Haupterstreckungsebene 18a schließt mit der Kochfeldebene 14a einen Winkel von etwa 45° ein.

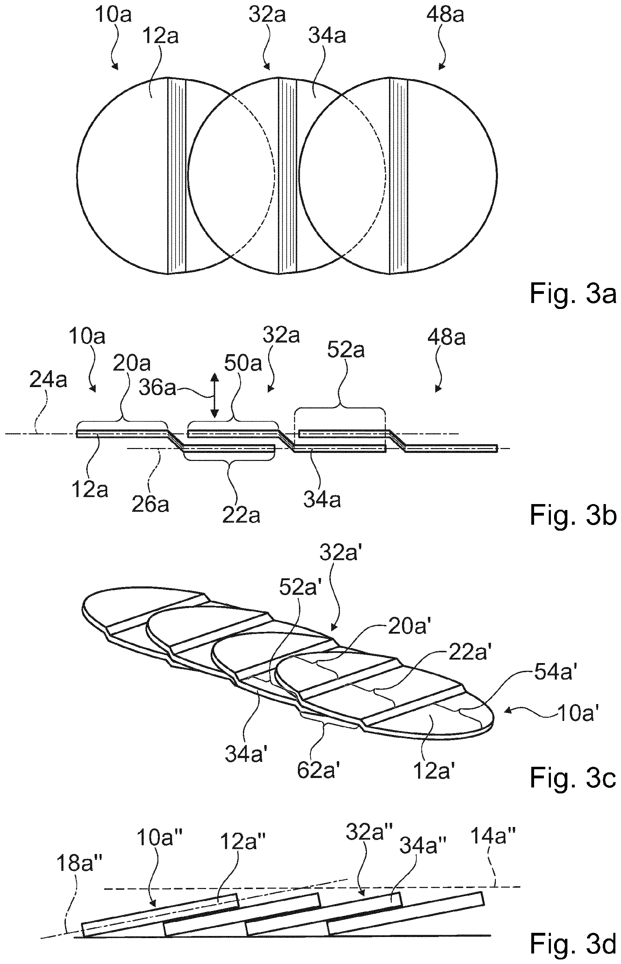

Das Induktionsheizelement 12a weist einen ersten Abschnitt 20a auf. Das Induktionsheizelement 12a weist einen zweiten Abschnitt 22a auf. Der erste Abschnitt 20a erstreckt sich innerhalb einer zweiten Haupterstreckungsebene 24a. Der zweite Abschnitt 22a erstreckt sich innerhalb einer dritten Haupterstreckungsebene 26a. Die dritte Haupterstreckungsebene 26a ist von der zweiten Haupterstreckungsebene 24a verschieden. Die zweite Haupterstreckungsebene 24a und die dritte Haupterstreckungsebene 26a verlaufen parallel zueinander. Die zweite Haupterstreckungsebene 24a und die dritte Haupterstreckungsebene 26a sind parallel zueinander versetzt. Die erste Haupterstreckungsebene 18a erstreckt sich parallel zur Kochfeldebene 14a. Der Teilbereich 16a ist zwischen dem ersten Abschnitt 20a und dem zweiten Abschnitt 22a angeordnet. Die erste Haupterstreckungsebene 18a verläuft schräg zur zweiten Haupterstreckungsebene 24a. Die erste Haupterstreckungsebene 18a verläuft schräg zur dritten Haupterstreckungsebene 26a. Der erste Abschnitt 20a und der zweite Abschnitt 22a weisen eine gleiche Größe auf. Der erste Abschnitt 20a und der zweite Abschnitt 22a weisen eine gleiche Fläche, Breite und/oder Länge auf. In den Figuren 3a und 3b ist die Induktionsheizeinheit 10a und eine weitere Induktionsheizeinheit 32a der Induktionskochfeldvorrichtung gezeigt. Es ist ferner eine dritte Induktionsheizeinheit 48a dargestellt, die jedoch aufgrund eines baugleichen Aufbaus mit den Induktionsheizeinheiten 10a, 32a nicht näher beschrieben wird.

Die weitere Induktionsheizeinheit 32a umfasst ein weiteres Induktionsheizelement 34a. Das weitere Induktionsheizelement 34a weist einen weiteren ersten Abschnitt 50a und einen weiteren zweiten Abschnitt 52a auf. Der weitere erste Abschnitt 50a erstreckt sich in einem Betriebszustand und/oder in einem montierten Zustand innerhalb der zweiten Haupterstreckungsebene 24a. Der weitere zweite Abschnitt 52a erstreckt sich innerhalb der dritten Haupterstreckungsebene 26a. Das Induktionsheizelement 12a und das weitere Induktionsheizelement 34a überlappen sich in einer Richtung 36a senkrecht zu der zweiten Haupterstreckungsebene 24a betrachtet teilweise. Insbesondere überlappt der weitere erste Abschnitt 50a des weiteren Induktionsheizelements 34a zu wenigstens einem Großteil den zweiten Abschnitt 22a des Induktionsheizelements 12a.

In einer Variante der Erfindung weist das Induktionsheizelement 12a' der Induktionsheizeinheit 10a' zusätzlich zum ersten Abschnitt 20a' und zweiten Abschnitt 22a', einen dritten Abschnitt 54a' auf. Der dritte Abschnitt 54a' erstreckt sich zumindest im Wesentlichen innerhalb einer vierten Haupterstreckungsebene. Die vierte Haupterstreckungsebene erstreckt sich von der zweiten und dritten Haupterstreckungsebene 24a', 26a' verschieden. Die zweite Haupterstreckungsebene 24a', die dritte Haupterstreckungsebene 26a' und die vierte Haupterstreckungsebene verlaufen parallel zueinander. Die zweite Haupterstreckungsebene 24a', die dritte Haupterstreckungsebene 26a' und die vierte Haupterstreckungsebene sind parallel zueinander versetzt angeordnet. Die dritte Haupterstreckungsebene 26a' ist in einer Richtung 36a' senkrecht zu der zweiten Haupterstreckungsebene 24a' betrachtet, zwischen der zweiten Haupterstreckungsebene 24a' und der vierten Haupterstreckungsebene angeordnet. Das Induktionsheizelement 12a' weist zwei Teilbereiche 16a' auf, die entlang einer ersten Haupterstreckungsebene 18a' und einer fünften Haupterstreckungsebene verlaufen, die beide von der Kochfeldebene 14a' abweichen. Die erste Haupterstreckungsebene 18a' und die fünfte Haupterstreckungsebene verlaufen parallel zueinander. Die Abschnitte 20a', 22a', 54a' unterteilen das Induktionsheizelement in zumindest einer Richtung in drei gleich lange Teile. Wie dargestellt, überlappen sich mehrere der Induktionsheizelemente 12a' derart, dass der erste Abschnitt 20a' und der zweite Abschnitt 22a' eines Induktionsheizelements 12a' einen weiteren zweiten Abschnitt 54a' und einen weiteren dritten Abschnitt 62a' eines weiteren Induktionsheizelements 34a' einer Induktionsheizeinheit 32a' überlappt.

Wie in einer in der Figur 3d gezeigten Variante ist es auch denkbar, dass sich das Induktionsheizelement 12a" nicht nur in einem entlang einer ersten Haupterstreckungsebene 18a" erstreckt, die von der Kochfeldebene 14a" abweicht. Stattdessen erstreckt sich das Induktionsheizelement 12a" vollständig entlang einer ersten Haupterstreckungsebene 18a", die von der Kochfeldebene 14a" abweicht. Auch in diesem Fall können mehrere Induktionsheizelemente 12a" sich teilweise überlappen. Die Induktionsheizelemente 12a" sind hierbei zueinander schräg geschichtet.

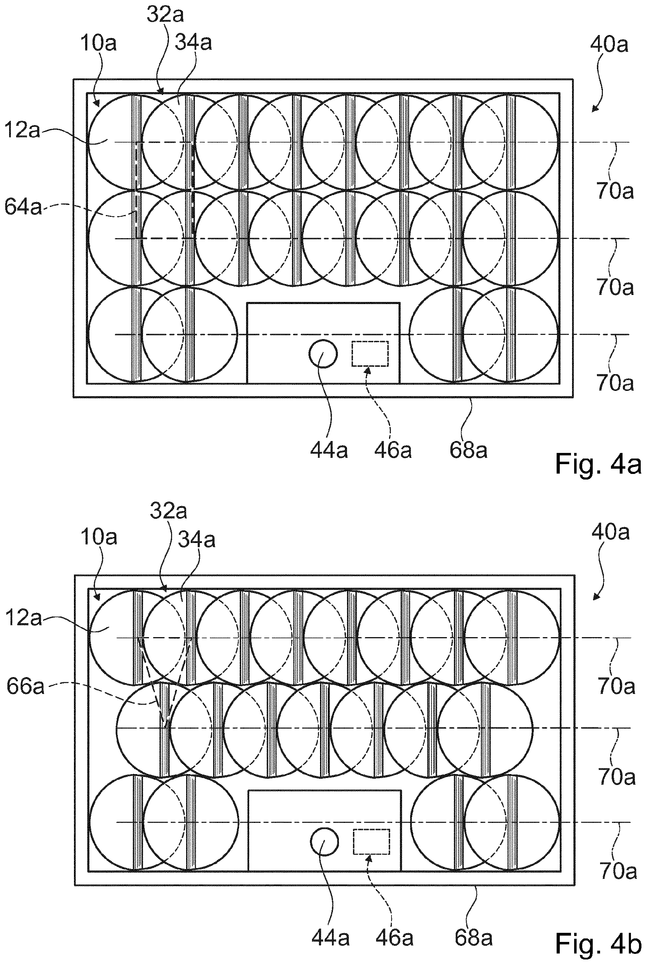

Die Figuren 4a bis 4e zeigen alle die Kochfeldplatte 40a mit verschiedenen Anordnungsmöglichkeiten der Induktionsheizeinheiten 10a, 32a. In der Figur 4a sind die Mittelpunkte aller Induktionsheizeinheiten 10a, 32a in einer Matrix angeordnet. Die Induktionsheizeinheiten 10a, 32a sind in jeweiligen Reihen 70a hintereinander und einander überlappend angeordnet. Zwischen zwei benachbarten Reihen 70a gibt es keine Überlappungen. Die Reihen 70a verlaufen parallel zu einer längsten Außenkante 68a der Kochfeldplatte 40a.

Die Reihen 70a verlaufen parallel zueinander. Verbindet man vier Mittelpunkte von zueinander am nächsten liegenden Induktionsheizeinheiten 10a, 32a, ergibt sich ein Rechteck 64a, dessen Länge und Breite voneinander abweichen. Eine längste Kante des Rechtecks 64a verläuft senkrecht zur Außenkante 68a.

In der Figur 4b sind die Mittelpunkte aller Induktionsheizeinheiten 10a, 32a zueinander versetzt in Reihen 70a angeordnet. Somit sind die Induktionsheizeinheiten 10a, 32a in Reihen 70a hintereinander und einander überlappend angeordnet. Zwischen zwei benachbarten Reihen 70a gibt es keine Überlappungen. Die Reihen 70a verlaufen parallel zu einer längsten Außenkante 68a der Kochfeldplatte 40a. Die Reihen 70a verlaufen parallel zueinander. Verbindet man drei Mittelpunkte von zueinander am nächsten liegenden Induktionsheizeinheiten 10a, 32a, ergibt sich ein gleichschenkliges Dreieck 66a. Eine Basis des gleichschenkligen Dreiecks 66a verläuft parallel zu den Reihen 70a und/oder zu der Außenkante 68a.

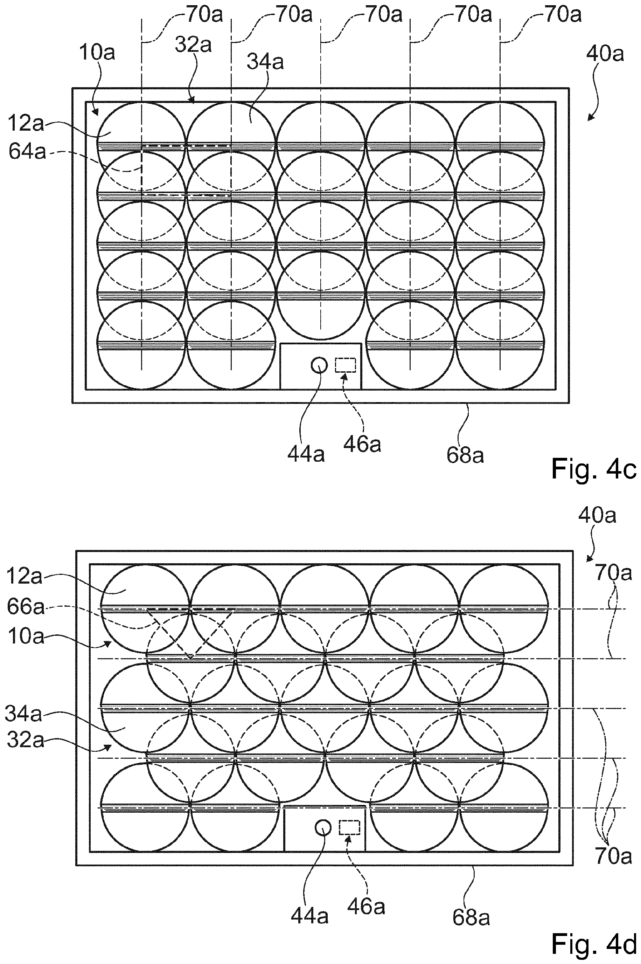

In der Figur 4c sind die Mittelpunkte aller Induktionsheizeinheiten 10a, 32a in einer Matrix angeordnet. Die Induktionsheizeinheiten 10a, 32a sind in jeweiligen Reihen 70a hintereinander und einander überlappend angeordnet. Zwischen zwei benachbarten Reihen 70a gibt es keine Überlappungen. Die Reihen 70a verlaufen senkrecht zu einer längsten Außenkante 68a der Kochfeldplatte 40a. Die Reihen 70a verlaufen parallel zueinander. Verbindet man vier Mittelpunkte von zueinander am nächsten liegenden Induktionsheizeinheiten 10a, 32a ergibt sich ein Rechteck 64a, dessen Länge und Breite voneinander abweichen. Eine längste Kante des Rechtecks 64a verläuft parallel senkrecht zur Außenkante 68a.

In der Figur 4d sind die Mittelpunkte aller Induktionsheizeinheiten 10a, 32a zueinander versetzt in Reihen 70a angeordnet. Die Induktionsheizeinheiten 10a, 32a sind in Reihen 70a und Spalten 72a hintereinander und einander überlappend angeordnet. Zwischen zwei benachbarten Reihen 70a gibt eshierbei ebenfalls Überlappungen. Die Reihen 70a verlaufen parallel zu einer längsten Außenkante 68a der Kochfeldplatte 40a. Die Reihen 70a verlaufen parallel zueinander. Verbindet man drei Mittelpunkte von zueinander am nächsten liegenden Induktionsheizeinheiten 10a, 32a ergibt sich ein gleichschenkliges und zumindest im Wesentlichen rechtwinkliges Dreieck 66a. Eine Basis des gleichschenkligen Dreiecks 66a verläuft parallel zu den Reihen 70a und/oder zu der Außenkante 68a.

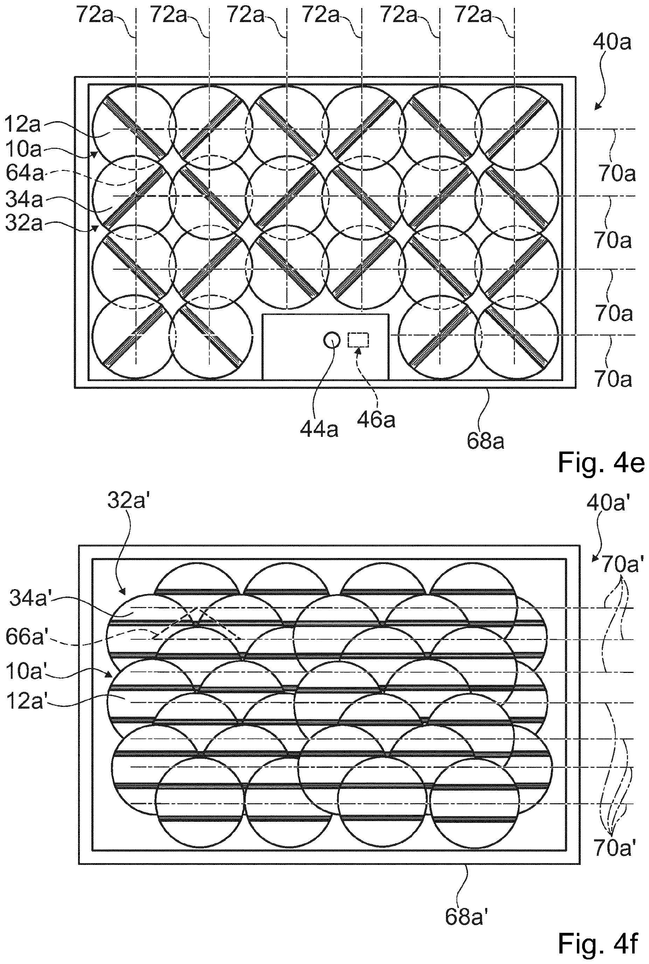

In der Figur 4e sind die Mittelpunkte aller Induktionsheizeinheiten 10a, 32a in einer Matrix angeordnet. Die Induktionsheizeinheiten 10a, 32a sind in jeweiligen Reihen 70a und Spalten 72a hintereinander und einander überlappend angeordnet. Die Reihen 70a und Spalten 72a bilden ein quadratisches Muster aus. Zwischen zwei benachbarten Reihen 70a und Spalten 72a gibt es hierbei Überlappungen der Induktionsheizeinheiten 10a, 32a. Die Reihen 70a verlaufen parallel zu einer längsten Außenkante 68a der Kochfeldplatte 40a. Die Spalten 72a verlaufen senkrecht zu einer längsten Außenkante 68a der Kochfeldplatte 40a. Die Reihen 70a verlaufen parallel zueinander. Die Spalten 72a verlaufen parallel zueinander. Verbindet man vier Mittelpunkte von zueinander am nächsten liegenden Induktionsheizeinheiten 10a, 32a ergibt sich ein Quadrat 64a.

Die Figur 4f zeigt eine alternativ ausgebildete Kochfeldplatte 40a' mit einer Anordnungsmöglichkeit der in der Figur 3c gezeigten Induktionsheizeinheiten 10a', 32a'. Die Induktionsheizeinheiten 10a, 32a sind in Reihen 70a' und Spalten 72a' hintereinander und einander überlappend angeordnet. Zwischen zwei benachbarten Reihen 70a' gibt es hierbei ebenfalls Überlappungen. Die Reihen 70a' verlaufen parallel zu einer längsten Außenkante 68a' der Kochfeldplatte 40a'. Die Reihen 70a' verlaufen parallel zueinander. Verbindet man drei Mittelpunkte von zueinander am nächsten liegenden Induktionsheizeinheiten 10a', 32a' ergibt sich ein gleichschenkliges und zumindest im Wesentlichen rechtwinkliges Dreieck 66a'. Eine Basis des gleichschenkligen Dreiecks 66a' verläuft parallel zu den Reihen 70a' und/oder zu der Außenkante 68a'.

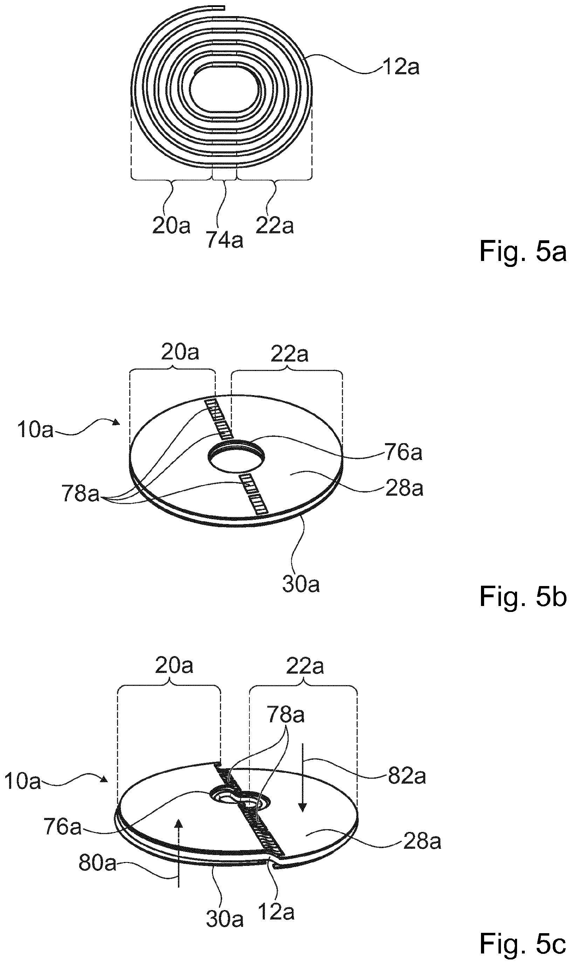

In der Figur 5a ist das Induktionsheizelement 12a der Induktionsheizeinheit 10a detaillierter dargestellt. Das Induktionsheizelement 12a ist spiralförmig und/oder spulenförmig gewickelt und/oder gebogen. In einem Biegebereich 74a verläuft das Induktionsheizelement 12a gerade. Verschiedene Wicklungen des Induktionsheizelements 12 verlaufen im Biegebereich 74a parallel zueinander. Der Biegebereich 74a wird in einem nachfolgend beschriebenen Verfahren zum bereits beschriebenen Teilbereich 16a umgeformt.

Wie in der Figur 5b gezeigt, umfasst die Induktionsheizeinheit 10a einen ersten Heizelementträger 28a. Der Heizelementträger 28a bildet eine Scheibe aus. Der Heizelementträger 28a ist aus einem dem Fachmann als sinnvoll erscheinenden Material, wie insbesondere aus einem Kunststoff und/oder einem Glimmermaterial, ausgebildet. In einem Zentrum weist der Heizelementträger 28a eine Ausnehmung 76a auf. Die Ausnehmung 76a ist durchgängig ausgebildet. Die Ausnehmung 76a ist kreisrund ausgebildet. Die Ausnehmung 76a ist aus dem Heizelementträger 28a ausgestanzt. Entlang des Biegebereichs 74a weist der Heizelementträger 28a weitere Ausnehmungen 78a auf. Die weiteren Ausnehmungen 78a sind aus dem Heizelementträger 28a ausgestanzt. Die weiteren Ausnehmungen 78a bilden eine Sollbruchstelle des Heizelementträgers 28a aus. Weiterhin umfasst die Induktionsheizeinheit 10a einen zweiten Heizelementträger 30a. Der zweite Heizelementträger 30a ist baugleich zum ersten Heizelementträger 28a ausgebildet. Die Heizelementträger 28a, 30a sind übereinander deckungsgleich angeordnet. Zwischen den Heizelementträgern 28a, 30a ist das Induktionsheizelement 12a angeordnet. Das Induktionsheizelement 12a ist zumindest bereichsweise am ersten Heizelementträger 28a angeordnet. Das Induktionsheizelement 12a ist zumindest bereichsweise am zweiten Heizelementträger 30a angeordnet. Die Heizelementträger 28a, 30a und das Induktionsheizelement 12a bilden eine Sandwichstruktur aus.

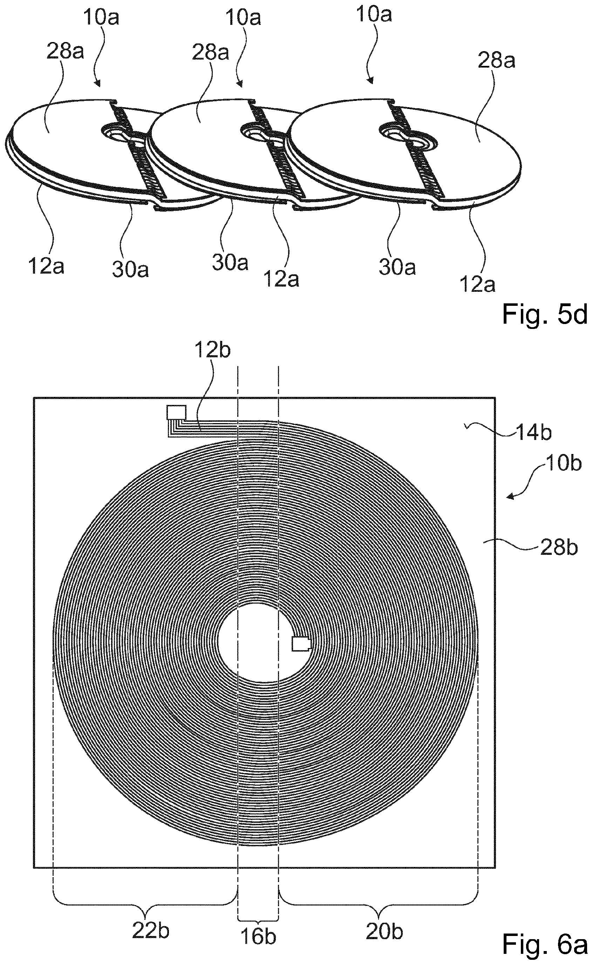

In einem Verfahren zur Herstellung der Induktionskochfeldvorrichtung wird in einem Verfahrensschritt der erste Abschnitt 20a des Induktionsheizelements 12a der Induktionsheizeinheit 10a mit zumindest einer ersten Kraftkomponente 80a senkrecht zu einer Haupterstreckungsebene 18a der Induktionsheizeinheit 10a beaufschlagt. Die Kraftkomponente 80a wirkt dabei auf einen der Heizelementträger 28a, 30a. In diesem Fall wird die Kraftkomponente 80a auf den zweiten Heizelementträger 30a ausgeübt. Eine zur Kraftkomponente 80a entgegengesetzte Kraftkomponente 82a wirkt im zweiten Abschnitt 22a auf das Induktionsheizelement 12a der Induktionsheizeinheit 10a über den ersten Heizelementträger 28a. Zumindest durch die erste Kraftkomponente 80a wird die Haupterstreckungsebene 24a des ersten Abschnitts 20a gegenüber einer Haupterstreckungsebene 26a des zweiten Abschnitts 22a der Induktionsheizeinheit 10a verschoben. Die Heizelementträger 28a, 30a brechen dabei entlang ihrer Sollbruchstellen. Das Induktionsheizelement 12a wird bereichsweise verbogen und/oder plastisch dauerhaft verformt. Genauer gesagt wird die Induktionsheizeinheit 10a zweifach geknickt und/oder gebogen. Das Induktionsheizelement 12a wird dabei doppelbogenförmig und/oder S-förmig gebogen. Die Heizelementträger 28a, 30a bilden eine Isolationsschicht aus. Diese Isolationsschicht wird in einem zwischen dem ersten Abschnitt 20a und dem zweiten Abschnitt 22a angeordneten Zwischenabschnitt durchtrennt, insbesondere kontrolliert durchtrennt. Abschließend werden die so hergestellten Induktionsheizeinheiten 10a einander überlappend angeordnet, wie beispielhaft in der Figur 5d dargestellt.

In den Figuren 6a bis 7b sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 5d, verwiesen werden kann. Zur Unterscheidung der Ausführungsbeispiele ist der Buchstabe a in den Bezugszeichen des Ausführungsbeispiels der Figuren 1 bis 5d durch die Buchstaben b und c in den Bezugszeichen der Ausführungsbeispiele der Figuren 6a bis 7b ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 und 5d, verwiesen werden.

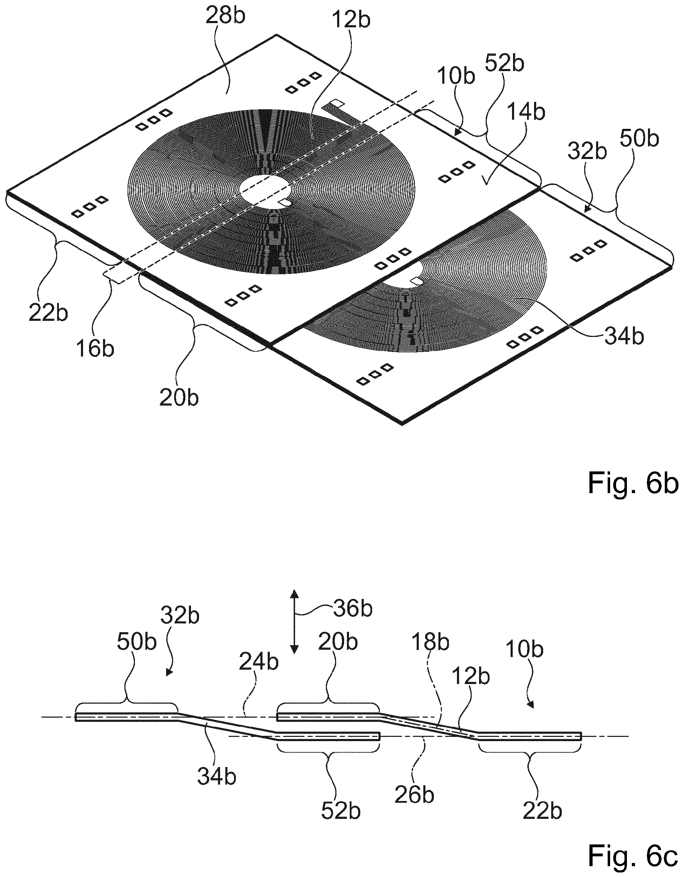

In den Figuren 6a und 6b ist eine Induktionsheizeinheit 10b eines zweiten Ausführungsbeispiels einer Induktionskochfeldvorrichtung dargestellt. Die Induktionsheizeinheit 10b umfasst ein Induktionsheizelement 12b. Die Induktionskochfeldvorrichtung weist eine Kochfeldebene 14b auf. Wie in der Figur 6c übertrieben und nicht maßstäblich dargestellt, erstreckt sich das Induktionsheizelement 12b zumindest in einem Teilbereich 16b entlang einer ersten Haupterstreckungsebene 18b, die von der Kochfeldebene 14b abweicht. Das Induktionsheizelement 12b weist einen ersten Abschnitt 20b und einen zweiten Abschnitt 22b auf. Der erste Abschnitt 20b erstreckt sich innerhalb einer zweiten Haupterstreckungsebene 24b. Der zweite Abschnitt 22b erstreckt sich innerhalb einer von der zweiten Haupterstreckungsebene 24b verschiedenen dritten Haupterstreckungsebene 26b. Ein Versatz zwischen den Haupterstreckungsebenen 24b, 26b ist relativ gering, weshalb er in den Figuren 6a und 6b nicht zu erkennen ist und in der Figur 6c stark übertrieben dargestellt ist. Der Teilbereich 16b ist zwischen dem ersten Abschnitt 20b und dem zweiten Abschnitt 22b angeordnet.

Wie in der Figur 6c weiter gezeigt, verlaufen die zweite Haupterstreckungsebene 24b und die dritte Haupterstreckungsebene 26b parallel zueinander. Die Induktionsheizeinheit 10b umfasst einen ersten Heizelementträger 28b. Der Heizelementträger 28b ist lediglich in den Figuren 6a und 6b gezeigt und aus Gründen der Übersichtlichkeit in der Figur 6c nicht dargestellt. Der Heizelementträger 28b bildet eine Leiterplatte aus. Das Induktionsheizelement 12b ist auf dem Heizelementträger 28b angeordnet. Zur Aufnahme des Induktionsheizelements 12b sind im Heizelementträger 28b Rillen und/oder Furchen eingelassen. Das Induktionsheizelement 12b ist auf den Heizelementträger 28b aufgedruckt oder in einem anderen, dem Fachmann als sinnvoll erscheinenden Verfahren aufgetragen.

Wie in der Figur 6b näher gezeigt, umfasst die Induktionskochfeldvorrichtung eine weitere Induktionsheizeinheit 32b mit zumindest einem weiteren Induktionsheizelement 34b, welches einen weiteren ersten Abschnitt 50b und zumindest einen weiteren zweiten Abschnitt 52b aufweist. Der weitere erste Abschnitt 50b erstreckt sich in einem Betriebszustand innerhalb der zweiten Haupterstreckungsebene 24b und sich der zweite Abschnitt 52b erstreckt sich innerhalb der dritten Haupterstreckungsebene 26b. Das Induktionsheizelement 12b und das weitere Induktionsheizelement 34b überlappen sich in einer Richtung 36b senkrecht zu der zweiten Haupterstreckungsebene 24b betrachtet teilweise.

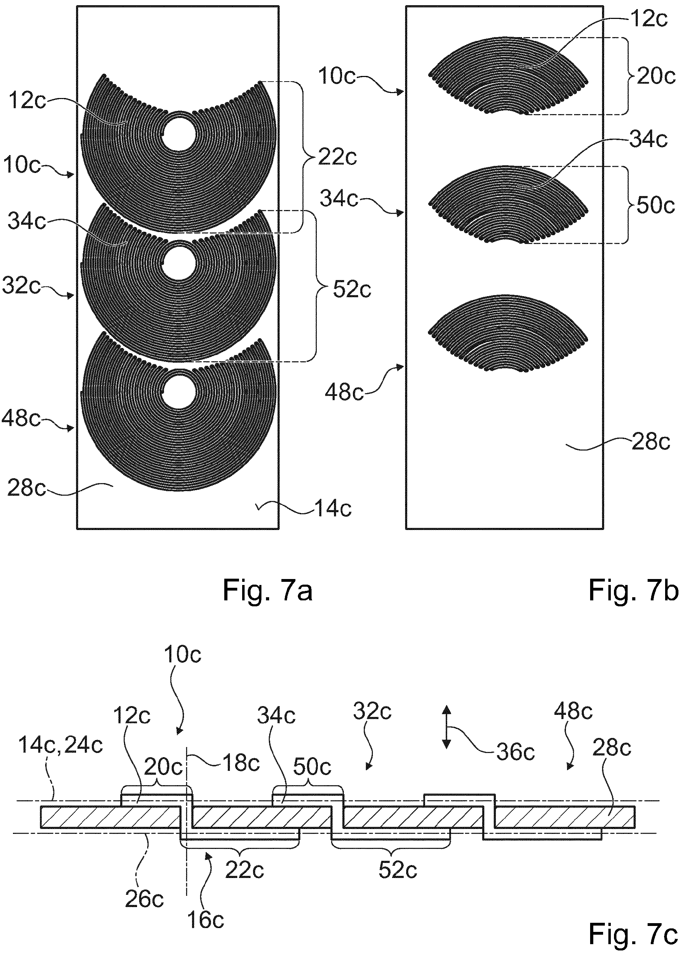

In den Figuren 7a und 7b ist eine Induktionsheizeinheit 10c eines dritten Ausführungsbeispiels einer Induktionskochfeldvorrichtung dargestellt. Die Induktionsheizeinheit 10c umfasst ein Induktionsheizelement 12c. Die Induktionskochfeldvorrichtung weist eine Kochfeldebene 14c auf. Wie in der Figur 7c in einer schematischen Schnittdarstellung gezeigt, erstreckt sich das Induktionsheizelement 12c zumindest in einem Teilbereich 16c entlang einer ersten Haupterstreckungsebene 18c, die von der Kochfeldebene 14c abweicht. Die erste Haupterstreckungsebene 18c verläuft senkrecht zur Kochfeldebene 14c. Das Induktionsheizelement 12c weist einen ersten Abschnitt 20c und einen zweiten Abschnitt 22c auf. Der erste Abschnitt 20c erstreckt sich innerhalb einer zweiten Haupterstreckungsebene 24c. Der zweite Abschnitt 22c erstreckt sich innerhalb einer von der zweiten Haupterstreckungsebene 24c verschiedenen dritten Haupterstreckungsebene 26c. Der Teilbereich 16c ist in einem Überlappungsbereich des ersten Abschnitts 20c und des zweiten Abschnitts 22c angeordnet.

Wie in der Figur 7c weiter gezeigt, verlaufen die zweite Haupterstreckungsebene 24c und die dritte Haupterstreckungsebene 26c zumindest im Wesentlichen parallel zueinander. Die Induktionsheizeinheit 10c umfasst einen ersten Heizelementträger 28c. Der Heizelementträger 28c bildet eine Leiterplatte aus. Das Induktionsheizelement 12c ist auf dem Heizelementträger 28c angeordnet. Zur Aufnahme des Induktionsheizelements 12c sind im Heizelementträger 28c Rillen und/oder Furchen eingelassen. Das Induktionsheizelement 12c ist auf den Heizelementträger 28c aufgedruckt und in einem anderen, dem Fachmann als sinnvoll erscheinenden Verfahren aufgetragen. Das Induktionsheizelement 12c verläuft im ersten Abschnitt 20c auf einer ersten Seite des Heizelementträgers 28c. Das Induktionsheizelement 12c verläuft im zweiten Abschnitt 22c auf einer zweiten Seite des Heizelementträgers 28c. Die erste Seite des Heizelementträgers 28c und die zweite Seite des Heizelementträgers 28c sind voneinander abgewandt. Es ist prinzipiell denkbar, dass der Heizelementträger 28c drei und/oder mehrere Lagen umfasst, in welchen das Induktionsheizelement 12c angeordnet ist. Im Teilbereich 16c geht das Induktionsheizelement 12c durch den Heizelementträger 28c hindurch von einer Seite auf die andere Seite. Der Teilbereich 16c verläuft senkrecht auf die Kochfeldebene 14c betrachtet sichelförmig.

Wie in den Figuren 7a und 7b gezeigt, sind auf dem Heizelementträger 28c mehrere Induktionsheizeinheiten 10c, 32c, 48c hintereinander angeordnet. Es ist in diesem Zusammenhang jedoch auch denkbar, dass jede Induktionsheizeinheit 10c, 32c, 48c auf einem separaten Heizelementträger 28c angeordnet ist. Ein weitere Induktionsheizeinheit 32c der Induktionsheizeinheiten 10c, 32, 48c weist ein weiteres Induktionsheizelement 34c auf, welches einen weiteren ersten Abschnitt 50c und zumindest einen weiteren zweiten Abschnitt 52c aufweist. Der weitere erste Abschnitt 50c erstreckt sich in einem Betriebszustand innerhalb der zweiten Haupterstreckungsebene 24c und sich der zweite Abschnitt 52c erstreckt sich innerhalb der dritten Haupterstreckungsebene 26c. Das Induktionsheizelement 12c und das weitere Induktionsheizelement 34c überlappen sich in einer Richtung 36c senkrecht zu der zweiten Haupterstreckungsebene 24c betrachtet teilweise.

Die Figur 8 zeigt eine alternative Vorrichtung zur induktiven Energieübertragung 40d anhand einer beispielhaft ausgewählten Ausgestaltung zur induktiven Energieübertragung an ein Elektrowerkzeug 84d. Im vorliegenden Ausführungsbeispiel ist das Elektrowerkzeug 84d eine Handwerkzeugmaschine. Das Elektrowerkzeug 84d weist einen Akkumulator 86d auf, welcher zu einem Empfang der von der Vorrichtung zur induktiven Energieübertragung 40d bereitgestellten Energie vorgesehen ist.

Die Vorrichtung zur induktiven Energieübertragung 40d weist eine Kontaktebene 14d auf. Die Kontaktebene 14d ist im vorliegenden Ausführungsbeispiel durch eine Oberfläche einer Gehäuseeinheit 88d der Vorrichtung zur induktiven Energieübertragung 40d definiert und/oder gebildet. Die Kontaktebene 14d ist von einer Auflageplatte 42d gebildet und/oder definiert. Die Auflageplatte 42d ist als eine Seitenwand der Gehäuseeinheit 88d ausgebildet.

Die Vorrichtung zur induktiven Energieübertragung 40d weist eine Induktionseinheit 10d und eine Vielzahl an weiteren Induktionsheizeinheiten 32d auf. Die Induktionseinheit 10d und die weiteren Induktionseinheiten 32d sind überlappend zueinander angeordnet. In der Figur 8 sind lediglich zwei der weiteren Induktionseinheiten 32d dargestellt. Im Folgenden wird stellvertretend für die weiteren Induktionseinheiten 32d die Induktionseinheit 10d beschrieben. Jede Induktionseinheit 10d, 32d umfasst ein Induktionselement 12d, 34d. Jedes Induktionselement 12d, 34d erstreckt sich in einem Teilbereich 16d entlang einer ersten Haupterstreckungsebene 18d, die von der Kontaktebene 14d abweicht.

Die Figur 9 zeigt eine alternative Vorrichtung zur induktiven Energieübertragung 40e anhand einer beispielhaft ausgewählten Ausgestaltung zur induktiven Energieübertragung an ein selbstfahrendes Arbeitsgerät 90e. Im vorliegenden Ausführungsbeispiel ist das selbstfahrende Arbeitsgerät 90e ein selbstfahrender Rasenmäher. Alternativ könnte das selbstfahrende Arbeitsgerät 90e beispielsweise ein selbstfahrender Staubsauger sein.

Eine Kontaktebene 14e der Vorrichtung zur induktiven Energieübertragung 40e ist ein Untergrund. Im vorliegenden Ausführungsbeispiel könnte die Kontaktebene 14e insbesondere ein Boden einer Garage und/oder einer Ladestation für das selbstfahrende Arbeitsgerät 90e sein. Im Fall eines selbstfahrenden Arbeitsgeräts 90e, welches ein selbstfahrender Staubsauger ist, könnte die Kontaktebene 14e beispielsweise ein Fußboden insbesondere eines Zimmers und/oder einer Ladestation für das selbstfahrende Arbeitsgerät 90e sein.

Alternativ oder zusätzlich zu den in den Ausführungsbeispielen der Figuren 1 bis 9 dargestellten Ausführungsformen könnte die Vorrichtung zur induktiven Energieübertragung 40a-e, die zumindest eine Induktionseinheit 10a-e, welche zumindest ein Induktionselement 12a-e umfasst, und zumindest eine Kontaktebene 14a-e aufweist, zu einer Verwendung in Verbindung mit zumindest einem Küchengerät und/oder mit zumindest einem Elektrowerkzeug und/oder mit zumindest einer Elektromobilität und/oder mit zumindest einem elektrisch betriebenen medizinischen Gegenstand und/oder mit zumindest einem Handy und/oder mit zumindest einem Laptop und/oder mit zumindest einem PC vorgesehen sein.

**Bezugszeichen**

| | | |
|---|---|---|
| 10 | Induktionsheizeinheit | Induktionseinheit |
| 12 | Induktionsheizelement | Induktionselement |
| 14 | Kochfeldebene | Kontaktebene |
| 16 | Teilbereich | |
| 18 | Haupterstreckungsebene | |
| 20 | Abschnitt | |
| 22 | Abschnitt | |
| 24 | Haupterstreckungsebene | |
| 26 | Haupterstreckungsebene | |
| 28 | Heizelementträger | Induktionselementträger |
| 30 | Heizelementträger | Induktionselementträger |
| 32 | Induktionsheizeinheit | Induktionseinheit |
| 34 | Induktionsheizelement | Induktionselement |
| 36 | Richtung | |
| 40 | Induktionskochfeld | Vorrichtung zur induktiven Energieübertragung |
| 42 | Kochfeldplatte | Auflageplatte |
| 44 | Bedienerschnittstelle | |
| 46 | Steuereinheit | |
| 48 | Induktionsheizeinheit | Induktionseinheit |
| 50 | Abschnitt | |
| 52 | Abschnitt | |
| 54 | Abschnitt | |
| 62 | Abschnitt | |
| 64 | Rechteck | |
| 66 | Dreieck | |
| 68 | Außenkante | |
| 70 | Reihe | |
| | | |
| 72 | Spalte | |
| 74 | Biegebereich | |
| 76 | Ausnehmung | |
| 78 | Ausnehmung | |
| 80 | Kraftkomponente | |
| 82 | Kraftkomponente | |
| 84 | Elektrowerkzeug | |
| 86 | Akkumulator | |
| 88 | Gehäuseeinheit | |
| 90 | Selbstfahrendes Arbeitsgerät | |

## Patentansprüche

1. Vorrichtung zur induktiven Energieübertragung mit zumindest einer Induktionseinheit (10a-e), welche zumindest ein Induktionselement (12a-e) umfasst, und mit zumindest einer Kontaktebene (14a-e), wobei sich das zumindest eine Induktionselement (12a-e) zumindest in einem Teilbereich (16a-e) entlang einer ersten Haupterstreckungsebene (18a-e) erstreckt, die von der Kontaktebene (14a-e) abweicht, wobei die erste Haupterstreckungsebene (18a-e) schräg oder senkrecht zur Kontaktebene (14a-e) verläuft, wobei das zumindest eine Induktionselement (12a-e) einen ersten Abschnitt (20a-e) und zumindest einen zweiten Abschnitt (22a-e) aufweist, wobei sich der erste Abschnitt (20a-e) zumindest im Wesentlichen innerhalb einer zweiten Haupterstreckungsebene (24a-e) erstreckt und sich der zweite Abschnitt (22a-e) zumindest im Wesentlichen innerhalb einer von der zweiten Haupterstreckungsebene (24a-e) verschiedenen dritten Haupterstreckungsebene (26a-e) erstreckt, **dadurch gekennzeichnet, dass** die zweite Haupterstreckungsebene (24a-e) und die dritte Haupterstreckungsebene (26a-e) zumindest im Wesentlichen parallel zueinander verlaufen.

2. Vorrichtung zur induktiven Energieübertragung nach Anspruch 1, **dadurch gekennzeichnet, dass** die Induktionseinheit (10a-e) zumindest einen ersten Induktionselementträger (28a-e, 30a) umfasst, an dem das zumindest eine Induktionselement (12a-e) zumindest bereichsweise angeordnet ist.

3. Vorrichtung zur induktiven Energieübertragung nach einem der vorhergehenden Ansprüche, **dadurch gekennzeichnet, dass** der zumindest eine Teilbereich (16a-e) zwischen dem ersten Abschnitt (20a-e) und dem zweiten Abschnitt (22a-e) angeordnet ist.

4. Vorrichtung zur induktiven Energieübertragung nach einem der vorhergehenden Ansprüche, **gekennzeichnet durch** zumindest eine weitere Induktionseinheit (32a-e) mit zumindest einem weiteren Induktionselement (34a-e), welches einen weiteren ersten Abschnitt (50a-e) und zumindest einen weiteren zweiten Abschnitt (52a-e) aufweist, wobei sich der weitere erste Abschnitt (50a-e) zumindest in einem Betriebszustand zumindest im Wesentlichen innerhalb der zweiten Haupterstreckungsebene (24a-e) erstreckt und sich der zweite Abschnitt (52a-e) zumindest im Wesentlichen innerhalb der dritten Haupterstreckungsebene (26a-e) erstreckt.

5. Vorrichtung zur induktiven Energieübertragung nach Anspruch 4, **dadurch gekennzeichnet, dass** sich das zumindest eine Induktionselement (12a-e) und das zumindest eine weitere Induktionselement (34a-e) in einer Richtung (36a-e) senkrecht zu der zweiten Haupterstreckungsebene (24a-e) betrachtet teilweise überlappen.

6. Matrixfeld mit zumindest einer Vorrichtung zur induktiven Energieübertragung nach einem der vorhergehenden Ansprüche.

7. Verfahren zur Herstellung einer Vorrichtung zur induktiven Energieübertragung nach einem der Ansprüche 1 bis 5, wobei in zumindest einem Verfahrensschritt ein erster Abschnitt (20a) eines Induktionselements (12a) einer Induktionseinheit (10a) mit zumindest einer ersten Kraftkomponente (80a) senkrecht zu einer Haupterstreckungsebene (24a) der Induktionseinheit (10a) beaufschlagt wird, wodurch eine Haupterstreckungsebene (24a) des ersten Abschnitts (20a) gegenüber einer Haupterstreckungsebene (26a) eines zweiten Abschnitts (22a) des Induktionselements (12a) der Induktionseinheit (10a) verschoben wird.

8. Verfahren nach Anspruch 7, **dadurch gekennzeichnet, dass** in dem zumindest einen Verfahrensschritt das Induktionselement (12a) der Induktionseinheit (10a), insbesondere zweifach, vorteilhaft doppelbogenförmig und/oder S-förmig, geknickt wird.

9. Verwendung der Vorrichtung zur induktiven Energieübertragung (40a-e) nach wenigstens einer der Ansprüche 1 bis 5 in Verbindung mit einem Küchengerät (40a-c) oder mit einem Elektrowerkzeug (84d) oder mit einer Elektromobilität oder mit einem elektrisch betriebenen medizinischen Gegenstand oder mit einem Handy oder mit einem Laptop oder mit einem PC.

## Claims

1. Device for inductive energy transfer with at least one induction unit (10a-e), which comprises at least one induction element (12a-e), and with at least one contact plane (14a-e), wherein the at least one induction element (12a-e) extends at least in a subarea (16a-e) along a first main extension plane (18a-e), which deviates from the contact plane (14a-e), wherein the first main extension plane (18a-e) runs obliquely or at right angles to the contact plane (14a-e), wherein the at least one induction element (12a-e) has a first section (20a-e) and at least one second section (22a-e), wherein the first section (20a-e) extends at least substantially within a second main extension plane (24a-e) and the second section (22a-e) extends at least substantially within a third main extension plane (26a-e) which differs from the second main extension plane (24a-e), **characterised in that** the second main extension plane (24a-e) and the third main extension plane (26a-e) run at least substantially parallel to one another.

2. Device for inductive energy transfer according to claim 1, **characterised in that** the induction unit (10a-e) comprises at least one first induction element support (28a-e, 30a), on which the at least one induction element (12a-e) is arranged at least in regions.

3. Device for inductive energy transfer according to one of the preceding claims, **characterised in that** the at least one subarea (16a-e) is arranged between the first section (20a-e) and the second section (22a-e).

4. Device for inductive energy transfer according to one of the preceding claims, **characterised by** at least one further induction unit (32a-e) with at least one further induction element (34a-e), which has a further first section (50a-e) and at least one further second section (52a-e), wherein at least in one operating state the further first section (50a-e) extends at least substantially within the second main extension plane (24a-e) and the second section (52a-e) extends at least substantially within the third main extension plane (26a-e).

5. Device for inductive energy transfer according to claim 4, **characterised in that** the at least one induction element (12a-e) and the at least one further induction element (34a-e) partially overlap in a direction (36a-e) viewed at right angles to the second main extension plane (24a-e).

6. Matrix field with at least one device for inductive energy transfer according to one of the preceding claims.

7. Method for producing a device for inductive energy transfer according to one of claims 1 to 5, wherein in at least one method step a first section (20a) of an induction element (12a) of an induction unit (10a) is applied with at least one first force component (80a) at right angles to a main extension plane (24a) of the induction unit (10a), as a result of which a main extension plane (24a) of the first section (20a) is displaced compared with a main extension plane (26a) of a second section (22a) of the induction element (12a) of the induction unit (10a).

8. Method according to claim 7, **characterised in that** in the at least one method step the induction element (12a) of the induction unit (10a) is kinked in particular twice, advantageously in a double-bend shape and/or S-shape.

9. Use of the device for inductive energy transfer (40a-e) according to at least one of claims 1 to 5, in conjunction with a kitchen appliance (40a-c) or with a power tool (84d) or with an electromobility or with an electrically operated medical object or with a mobile or with a laptop or with a PC.

## Revendications

1. Dispositif de transmission d'énergie inductrice comprenant au moins une unité d'induction (10a-e), laquelle comprend au moins un élément d'induction (12a-e), et comprenant au moins un plan de contact (14a-e), dans lequel l'au moins un élément d'induction (12a-e) s'étend au moins dans une zone partielle (16a-e) le long d'un premier plan d'étendue principale (18a-e) qui se différencie du plan de contact (14a-e), dans lequel le premier plan d'étendue principale (18a-e) s'étend de manière oblique ou perpendiculaire au plan de contact (14a-e), dans lequel l'au moins un élément d'induction (12a-e) comprend une première section (20a-e) et au moins une deuxième section (22a-e), dans lequel la première section (20a-e) s'étend au moins essentiellement à l'intérieur d'un deuxième plan d'étendue principale (24a-e) et la deuxième section (22a-e) s'étend au moins essentiellement à l'intérieur d'un troisième plan d'étendue principale (26a-e) différent du deuxième plan d'étendue principale (24a-e), **caractérisé en ce que** le deuxième plan d'étendue principale (24a-e) et le troisième plan d'étendue principale (26a-e) s'étendent au moins essentiellement parallèlement l'un à l'autre.

2. Dispositif de transmission d'énergie inductrice selon la revendication 1, **caractérisé en ce que** l'unité d'induction (10a-e) comprend au moins un premier support (28a-e, 30a) d'élément d'induction sur lequel est disposé l'au moins un élément d'induction (12a-e) au moins par endroits.

3. Dispositif de transmission d'énergie inductrice selon l'une quelconque des revendications précédentes, **caractérisé en ce que** l'au moins une zone partielle (16a-e) est disposée entre la première section (20a-e) et la deuxième section (22a-e).

4. Dispositif de transmission d'énergie inductrice selon l'une quelconque des revendications précédentes, **caractérisé par** au moins une unité d'induction supplémentaire (32a-e) comprenant au moins un élément d'induction supplémentaire (34a-e) lequel comprend une première section supplémentaire (50a-e) et au moins une deuxième section supplémentaire (52a-e), dans lequel la première section supplémentaire (50a-e), au moins dans un état de fonctionnement, s'étend au moins essentiellement à l'intérieur du deuxième plan d'étendue principale (24a-e) et la deuxième section (52a-e) s'étend au moins essentiellement à l'intérieur du troisième plan d'étendue principale (26a-e).

5. Dispositif de transmission d'énergie inductrice selon la revendication 4 **caractérisé en ce que** l'au moins un élément d'induction (12a-e) et l'au moins un élément d'induction supplémentaire (34a-e) se chevauchent en partie, en vue dans une direction (36a-e) perpendiculaire au deuxième plan d'étendue principale (24a-e).

6. Champ matriciel comprenant au moins un dispositif de transmission d'énergie inductrice selon l'une quelconque des revendications précédentes.

7. Procédé de fabrication d'un dispositif de transmission d'énergie inductrice selon l'une quelconque des revendications 1 à 5, dans lequel, dans au moins une étape de procédé, une première section (20a) d'un élément d'induction (12a) d'une unité d'induction (10a) est alimentée avec au moins une première composante de force (80a) perpendiculairement à un plan d'étendue principale (24a) de l'unité d'induction (10a), sur quoi un plan d'étendue principale (24a) de la première section (20a) est déplacé par rapport à un plan d'étendue principale (26a) d'une deuxième section (22a) de l'élément d'induction (12a) de l'unité d'induction (10a).

8. Procédé selon la revendication 7, **caractérisé en ce que** dans l'au moins une étape de procédé, l'élément d'induction (12a) de l'unité d'induction (10a) est notamment plié deux fois, de manière avantageuse en forme de double coude et/ou en forme de S.

9. Utilisation du dispositif de transmission d'énergie inductrice (40a-e) selon au moins l'une quelconque des revendications 1 à 5, en relation avec un appareil de cuisine (40a-c) ou un outil électrique (84d) ou une électromobilité ou un objet médical fonctionnant électriquement ou un téléphone portable ou un ordinateur portable ou un ordinateur personnel.
